Europäisches Patentamt

European Patent Office

Office européen des brevets

(11) Publication number: **0 207 450**
**B1**

(12) EUROPEAN PATENT SPECIFICATION

(45) Date of publication of patent specification: **12.09.90**

(21) Application number: **86108731.0**

(22) Date of filing: **26.06.86**

(51) Int. Cl.⁵: **H 01 B 1/24,** H 01 C 10/10,
C 08 K 3/04, C 08 K 7/04,
B 32 B 25/02 // G01L1/20

(54) **Pressure-sensitive conductive rubber material.**

(30) Priority: **03.07.85 JP 147160/85**
**13.09.85 JP 204020/85**
**13.11.85 JP 255652/85**

(43) Date of publication of application:
**07.01.87 Bulletin 87/02**

(45) Publication of the grant of the patent:
**12.09.90 Bulletin 90/37**

(84) Designated Contracting States:
**AT DE FR GB IT NL**

(56) References cited:
**DE-A-2 702 099      US-A-4 145 317**
**DE-C-2 752 540      US-A-4 495 236**
**US-A-4 028 276**

**JAPANESE PATENTS GAZETTE (unexamined),**
**vol. 80, no. 24, July 11, 1980, Section Ch-A85,**
**ref. no. 80-42 324C/24; Derwent Publ. Ltd.,**
**London, GB & JP-A-55 58 504 (JAP. SYNTH.**
**RUBBER((Cat. D)**

(73) Proprietor: **MITSUBOSHI BELTING LTD.**
**No. 1-21, 4-Chome, Hamazoe-dori**
**Nagata-ku Kobe City Hyogo, pref. (JP)**

(72) Inventor: **Mashimo, Satoshi**
**No. 13-15, 2-chome Nishishinmachi**
**Akashi-shi Hyogo (JP)**
Inventor: **Nagayasu, Susumu**
**No. 4-5-203, 2-chome Minamigoyo**
**Kita-ku, Kobe Hyogo (JP)**
Inventor: **Yamaguchi, Yoshio**
**No. 8-51-303, 3-chome Takakuradai**
**Suma-ku, Kobe Hyogo (JP)**
Inventor: **Noguchi, Toru**
**No. 8-14-101, 2-chome Fukaehonmachi**
**Hyogo (JP)**
Inventor: **Nakajima, Masayoshi**
**No. 8-5-112, Daito-cho Ashiya-shi**
**Hyogo (JP)**
Inventor: **Kakiuchi, Hajime**
**No. 28, 5-chome, Mizuho-cho**
**Itami-shi Hyogo (JP)**
Inventor: **Tanida, Kijuro**
**No. 4-8-510, Wakamiya-cho**
**Ashiya-shi Hyogo (JP)**

**EP 0 207 450 B1**

(56) References cited:
CHEMICAL ABSTRACTS, vol. 88, no. 145162f;
Columbus, Ohio, US

(74) Representative: **Lederer, Franz, Dr.**
**Van der Werth, Lederer & Riederer**
**Patentanwälte Lucile-Grahn-Strasse 22**
**D-8000 München 80 (DE)**

**Description**

This invention relates to an electrically conductive rubber material with pressure-sensitive conductivity and, more particularly, to such rubber material having an excellent elasticity by combining an inorganic filler and a rubber mixture to largely decrease the resistance value at pressurizing time from a nonpressure state and to sensitively vary the resistance value upon altering of the pressurizing force.

Heretofore, it is already disclosed, for example, in Japanese Patent Laid-open official gazettes Nos. 58504/1980, 147547/1980 and 5840/1981, in German patent specification 27 52 540 as well as in U.S. Patent specifications Nos. 2,951,817 and 3,758,213 that a rubber sheet produced by mixing carbon black having excellent conductivity or metallic particles including metallic whiskers in a rubber elastic material is deformed under pressure to largely decrease its electric resistance value. Also, the use of embedded metallic-conductive powder, e.g. titanium carbide powder, in conductive rubber is known from U.S. patent specification No. 4,028,276. Japanese official publication 55-58504 (Japanese Patents Gazette, section Ch-A85, vol. 80, no. 24, Abstr. no. 80—42 324C/24) describes a pressure sensitive resistor of rubber containing conductive carbon black and/or graphite powder and an insulating filler of bead or grain shaped particles, alkyl titanates, also being added.

Further, it is disclosed for example in Japanese Patent Laid-open official gazette No. 152033/1983 that, after conductive magnetic particles are dispersed in mixture in elastic insulating polymer, the mixture is molded while applying a magnetic field in a predetermined direction before crosslinking or during the crosslinking to produce a pressure-sensitive conductive rubber in which metallic particles are arranged along the magnetic field in a predetermined direction.

When the pressure-sensitive conductive rubber sheet of this type is effected by a distortion by a pressing force as a mechanism having a pressure-sensitive conductivity, the probability of forming a link due to the fact that the conductive particles dispersed in the sheet are first contacted with each other becomes high to reduce its resistance value.

A conductive rubber sheet in which an air gap portion of cellular structure is formed on the surface of the sheet and a conductive material such as metallic powder is highly filled and mixed so as to improve the sensitivity of the rubber sheet is disclosed, for example, in Japanese Patent Laid-open official gazette No. 20981/1983. Moreover, various conductive rubber sheets in which metallic fiber is filled in the thicknesswise direction of the rubber sheets (e.g., Japanese Patent Laid-open official gazette No. 220307/ 1983) are proposed, but when the conductive rubber sheet is pressed by both electrode plates interposed at both sides of the rubber sheet, the contacting surfaces of the rubber sheet with the electrode plates gradually increases, with the result that its resistance value reduces. Japanese official publication 52-139989 (Chemical Abstracts, vol. 88, no. 20, 1978, page 603, no. 145162f) describes a rubber resistor body containing electroconductive particles and using particles of different materials between the surface and the interior, so that the electrical resistivity of the surface layer is lower than that of an interior layer.

However, the prior art pressure-sensitive conductive rubbers have disadvantages in that the rubber generally varies the probability of conductive particles contacting each other, due to the variation in the temperature of its matrix, and the conductive particles and the matrix separate due to the compressing deformation of the rubber sheet, so that stable resistance values can not easily be obtained.

When the conductive rubber is used repeatedly for a long period, if a large strain is effected, the rubber has such drawbacks that the surface of the rubber matrix fatigues to harden and the rubber lacks creeping resistance with the result that the electrode plates start contacting with the conductive materials disposed on the surface of the rubber matrix, the electric resistance value at nonpressurizing time initially thereby decreases so that the variation amount of the electric resistance value at the pressurizing time cannot increase, resulting in the impossibility of maintaining a constant pressure-sensitive performance for a long period.

Mainly, even if a trend that the resistance value of the conventional pressure-sensitive conductive rubber decreases similarly as the pressing force increases in the relationship between the pressing force and the resistance value of the rubber, when the pressing force arrives at a predetermined value, its resistance value abruptly decreases or its pressure sensitive performance abruptly becomes low. It is general that the pressing force and the resistance value of the pressure-sensitive conductive rubber do not have a predetermined characteristic relation, and since the variation amount of the resistance value in a range of the predetermined pressing force is small and the pressure-sensitive performance is low, it cannot be used as a pressure-sensitive sensor.

Further, other conventional conductive rubber sheets have a complicated surface structure that metallic particles or fiber sink from the surface of the rubber matrix to have recesses on the surface, and since the metallic filler does not contact directly with the electrode plates at nonpressurizing time, the rubber sheets become a current interrupting state, while the electrode plates contact the metallic filler due to the deformation of the rubber matrix at pressurizing time to reduce its electric resistance value. However, in this case, the resistance value does almost not vary until the rubber matrix is highly deformed so that the electrode plates contact with the metallic filler, and if the plates once contact with the filler, it has a trend that its resistance value abruptly reduces even in a range of small pressurizing force. Small foreign materials such as dusts becoming engaged in fine recesses on the surface of the rubber matrix causes reducing the electric resistance value at the pressuriuzing time to cause the sensitivity to be deteriorated.

# EP 0 207 450 B1

## Summary of the invention

Accordingly, a primary object of this invention is to provide a pressure-sensitive conductive rubber material which can eliminate the drawbacks and disadvantages described above, and particularly which can improve the properties of the rubber material in which a conductive member is dispersed in an insulating rubber matrix, to gradually reduce its resistance value as a pressing force increases, and can obtain a wide range of relationship between the pressing force and the resistance value with large varying width of its resistance value. Further, the characteristics of the rubber material as a pressure sensor should have excellent fatigue creep resistances.

The electrically conductive rubber material of the invention is characterized in claim 1. It comprises a non-conductive rubber matrix wherein conductive carbon black, possibly an inorganic nonmetallic material and in any case an inorganic filler consisting of some particular ceramic whiskers is dispersed to form a composite material. According to specific embodiments, part of the inorganic filler is exposed on the surface of the rubber matrix on the surface of the composite material, and powder having electric insulating property is buried at least on one surface of the composite material.

Including whiskers, i.e. calcium sulphate whiskers, into rubber for general use is known per se from German laid open specification 27 02 099.

The above and other objects and features of the invention will be apparent from the following description referring to the accompanying drawings, and from the appended claims.

## Brief description of the drawings

Fig. 1 is a longitudinal sectional view of an embodiment of a pressure-sensitive conductive rubber sheet according to this invention;

Fig. 2 is a longitudinal sectional view of another embodiment of a pressure-sensitive conductive rubber sheet according to this invention;

Fig. 3 is a graphical diagram showing the relationship between the pressing force and the resistance value of Example 5 of the conductive rubber material in which the content of whiskers is varied;

Fig. 4 is a graphical diagram showing the relationship between the pressing force and the resistance value of Example 6 of the conductive rubber material in which the content of carbon black is varied;

Fig. 5 is a graphical diagram showing the relationship between the compression distortion and the voltage of Examples 26, 31 and 32 of the invention and comparison Example 11 of the rubber material;

Fig. 6 is a graphical diagram showing the relationship between the repetition number of acting on the conductive rubber material and the resistance value retentivity, of the examples of the invention and the comparison example;

Fig. 7 is a graphical diagram showing the creep characteristic of the conductive rubber material of the examples of the invention and the comparison example;

Fig. 8 is a graphical diagram showing first to third varying curves obtained by plotting the variation of electric resistance value upon pressing of the rubber sheet of the examples of the invention and the comparison example.

## Description of the preferred embodiments

In the electrically conductive rubber material of the invention, the used rubber having electric insulation properties includes, for example, natural rubber, polybutadiene rubber, polyisoprene rubber, styrene-butadiene copolymer rubber, nitrile rubber, butyl rubber, chloroprene rubber, acrylonitrile-butadiene copolymer rubber, ethylene-propylene copolymer rubber or silicone rubber. The rubber may contain two or more of them. The material may use crosslinking rubber of sulfur, sulfide or peroxide so as to improve the mechanical strength and heat resistance, and may be used after crosslinking.

The conductive carbon black used in this invention includes, for example, furnace blacks, acetylene blacks, thermal blacks, or channel blacks ordinarily used and known per se, and contains 30 to 70 parts by weight thereof with respect to 100 parts by weight of the rubber.

If the content of the carbon black is too low, the resistance value of the rubber material is high at pressurizing and nonpressurizing times and can hardly become pressure-sensitively conductive. If the content, on the other hand, is too high, the rubber is hardened and the effect of variation in the resistance value by pressing is reduced. If, however, the content is 30 to 70 parts by weight, the resistance value gradually varies as the pressing force increases, with a large varying range of the resistance value.

The inorganic filler used in the invention may include, for example, short fibers of nonmetallic inorganic material, powder or whiskers, and in any case includes whiskers of ceramics which have a lower electrical conductivity than metal or carbon, such as silicon carbide (SiC), these ceramic whiskers having 5 to 500 μm in length and 0.05 to 3 μm in diameter. If in addition a powder called "ceramic powder" is used, it should have 0.05 to 100 μm in diameter and includes, for example, carbides such as silicon carbide (SiC), titanium carbide (TiC), boron carbide ($B_4C$), or tungsten carbide (WC), nitrides such as silicon nitride ($Si_9N_4$), aluminum nitride (AlN), boron nitride (BN) or titanium nitride (TiC), and oxides such as alumina ($Al_2O_3$), zirconia ($ZrO_2$) or beryllia (BeO), and most preferably silicon carbide or silicon nitride.

The whiskers include alpha-silicon carbide (alpha-SiC), beta-silicon carbide (beta-SiC), alpha-aluminum oxide ($Al_2O_3$), titanium oxide and tin oxide, and have acicular crystals having, as stated, shapes of 0.05 to 3 μm in diameter and 5 to 500 μm in length. When the inorganic filler is added to the rubber, the

4

rubber is treated with silane coupling agent or titanium coupling agent, or when the filler is mixed with the rubber, silane coupling agent or titanium coupling agent may be added. Thus, reinforcing effect of the rubber is enhanced to improve the dispersibility of the filler into the rubber.

The method of mixing the respective ingredients or components is not particularly limited, and includes kneading and pressurizing by suitable means or processes known per se using, for example, Banbury mixer, kneader or rolls. A softening agent, an age preventing agent, a processing aid, a vulcanization accelerator, and/or a crosslinking agent as ordinarily used for the rubber may be added.

The pressure-sensitive conductive rubber sheet thus obtained becomes a composite material in which the above mentioned inorganic filler is dispersed in the rubber matrix, and according to a specific embodiment is partly exposed on the surface of the composite material which is sheet shaped. Such pressure-sensitive conductive rubber sheet takes the state that the filler exposed on the surface point-contacts with the electrode plates at nonpressurizing time to increase its resistance value until an insulating state wherein a link (a conducting path) is not formed as well. On the other hand, since the inorganic filler exposed on the surface is pressed on the rubber matrix at the time of relatively low pressing to gradually planely contact with the electrode plates in the pressure-sensitive conductive rubber described above, and simultaneously applies a local distortion to the rubber matrix, carbon black, the inorganic filler and the carbon black, or the inorganic filler approach each other to readily form a link, and its resistance value starts to gradually decrease. When the pressing force increases, the entire rubber matrix uniformly deforms. Thus, the conductive members contact each other to increase the probability of forming the link, thereby enhancing the conductivity.

Particularly, since the whiskers of the inorganic filler have acicular crystals and very rigid property, they are dispersed in and exposed on the rubber matrix in several directional angles. They feasibly approach the carbon black and the other whiskers at the time of pressurizing and take the state of readily forming a link, and its resistance sensitively varies by the small pressing force. Further, since the whiskers are acicular with very large aspect ratio while the carbon black is substantially granular, the conductive members of both are dispersed in entirely different states. Thus, it is presumed that different members such as the acicular member and the granular member, or the acicular member and the acicular member can sensitively approach each other as compared with the case that the granular members approach at the pressurizing time.

In the embodiment where the whiskers are buried in the rubber matrix on the surface of the composite material, they are partly exposed in the projected state in such a manner that the projecting amount is 0.05 to 500 μm and more preferably 0.1 to 200 μm.

In the invention, powder or short fibers of the same material as the whiskers may be used in addition to the whiskers as described above. In this case, the powder is or the short fibers may be dispersed in the surface of the unvulcanized sheet extruded from rolls and vulcanized so as to be exposed on the surface of the rubber matrix like the whiskers.

On the other hand, when electrically non-conductive powder is buried in the surface layer, the rubber material has good creep and fatigue resistance with good pressure sensitive performance together with the above characteristics.

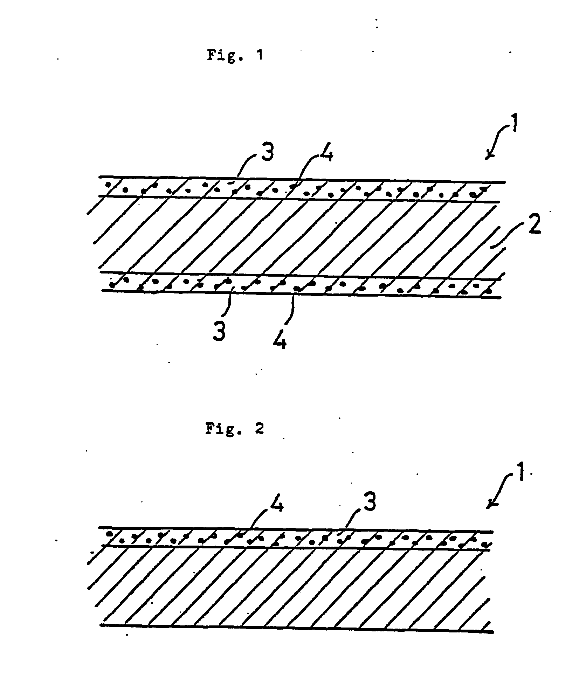

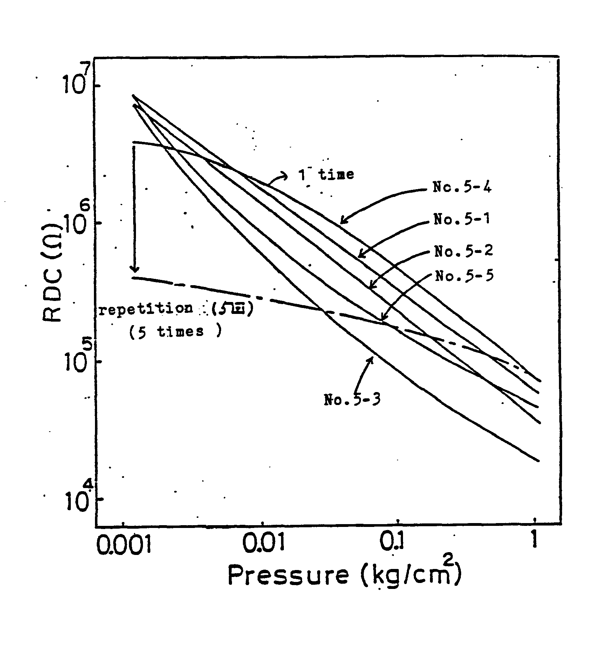

Fig. 1 shows a longitudinal sectional view of a specific embodiment of a pressure-sensitive conductive rubber sheet according to this invention and Fig. 2 shows a longitudinal sectional view of another specific embodiment of a pressure-sensitive conductive rubber sheet according to this invention.

A pressure-sensitive conductive rubber sheet 1 is formed of a sheet-shaped composite material 2 mixed with conductive carbon black, short fibers of nonmetallic inorganic material, powder and whiskers in a rubber matrix having electric insulation. A powder 4 having electric insulation property is buried in the composite material 2 on both side surface layers 3 of the material 2. On the other hand, the rubber sheet shown in Fig. 2 contains powder 4 buried in one surface layer 3 only of the sheet-shaped composite material 2. The thickness of the surface layers 3 shown in Figs. 1 and 2 is preferably 0.1 to 20% of the entire thickness of the composite material 2.

The non-conductive powder 4 consists, for example, of inorganic materials such as glass, calcium carbonate, clay and talc or of organic materials such as phenyl resin, epoxy resin, urea resin or ebonite, and its elements have powder shape, granular shape or short length rod shape of 0.1 to 100 μm in diameter. The adding amount of the powder 4 is 0.05 to 5% by weight. If less than 0.05% by weight, its special effect cannot be obtained, while if exceeding 5% by weight, the hardness of the surface layer increases unduly. Thus, since the surface layer 3 of the rubber sheet 1 is mixed and dispersed with the powder 4, in a neutral state a link is hardly formed between electrode plates contacting the surface layer, while when the rubber sheet 2 is compressed at the pressurizing time, the possibility of the conductive members dispersed in the surface layer 3 and the inner layer to contact each other increases to form the link. Further, when the powder 4 is buried in the surface layer 3 of the sheet 1 but part of the surface of the powder elements is exposed, the frictional coefficient decreases upon reducing the adhesiveness of the surface, and the electrode plate can readily separate from the surface of the rubber sheet 1.

Thus, it is apparent that the pressure-sensitive conductive rubber sheet of Figs. 1 and 2 has less variation in the electric resistance upon lapse of time due to further mechanical reinforcement by the powder 4 and the fatigue due to repeated pressing decreases.

The rubber sheet 1 is produced by adding the conductive carbon black and the inorganic filler including the whiskers to rubber having electric insulation property, and, as required, softening agent, age preventing agent, vulcanizing agent, and/or crosslinking agent used ordinarily in rubber, forming a sheet-shaped material from a kneaded mixture of the above ingredients by, for example, a Banbury mixer, or kneader rolls, wiping the non-conductive powder 4 on the surface of the sheet-shaped rubber material and then vulcanizing it, or forming in advance a sheet-shaped surface layer 3 mixed with the powder 4, laminating it on the sheet-shaped material and then vulcanizing it.

As the whiskers are used as the inorganic filler in the pressure-sensitive conductive rubber material of the invention, the following excellent properties can be performed:

In the pressure-sensitive conductive rubber material of the invention, special amounts of conductive carbon black and of whisker filler being used, its resistivity value gradually varies as the pressing force increases, and the material has a large resistivity varying range. The adding amount of the conductive carbon black is 30 to 70 parts by weight and preferably 40 to 60 parts by weight with respect to 100 parts by weight of the rubber. If less than 30 parts by weight, its resistivity value does not sensitively decrease as the pressing force increases even if the predetermined amount of whiskers is added. If exceeding 70 parts by weight, its resistivity value abruptly decreases, and if becoming more than a predetermined pressing force, the decreasing ratio of the resistivity value becomes small so that the pressure sensing performance becomes low.

On the other hand, the adding amount of the whiskers is 3.6 to 60 and more preferably 10 to 60 parts by weight and preferably 10 to 40 parts by weight with respect to 100 parts by weight of the rubber. If less than 10 parts by weight, when the relationship between the pressing force (log P) and the resistance value (log R) of a sample of the material is examined, it becomes a curve being convex in the upward direction, and when the pressing is repeated, the irregularity of the resistance value increases, and its creep resistance lacks. On the other hand, if exceeding 60 parts by weight, its resistance increases, and the effect of adding the whiskers is eliminated. When the adding amount of the whiskers is 10 to 40 parts by weight, the relationship between the pressing force (log P) and the resistance value (log R) approaches to become linear.

The total adding amount of the above conductive carbon black and the whiskers is 39.6 to 94 and preferably 40 to 90 parts by weight and more preferably 50 to 80 parts by weight with respect to 100 parts by weight of the rubber. If less than 40 parts by weight, the resistivity value does not sensitively respond to the variation in the pressing force, thus the rubber lacks the pressure sensitivity. On the other hand, if exceeding 90 parts by weight, its conductivity increases and the variation in the resistivity value with respect to the variation in the pressing force is small, and the pressure sensitivity decreases.

The pressure-sensitive conductive rubber material described above receives its gradual variability of its resistivity value as the pressing force increases, by mixing and dispersing the carbon black and the whiskers in the limited adding amount of them, and increases its variation range in the resistivity value. Thus, even if the pressing is repeated, the property of small variation in the resistivity value is provided, and further the rubber material also has a property of varying the voltage by the amount of compressing deformation.

Examples of the pressure-sensitive conductive rubber material of this invention will be described. However, this invention is not limited to the particular Examples.

Example 1

After the rubber mixtures based on Table 1 were kneaded by a Banbury mixer, the mixtures were extruded by rolls into sheets having 2 mm of thickness. The sheets were sequentially engaged in a mold, and vulcanized under vulcanizing conditions of 150° and 20 minutes. The obtained sheets were cut into $30 \times 33$ mm$^2$ as test pieces, and electric resistance values of the test pieces were measured at nonpressurizing and pressurizing times. After several seconds from when a load of 5 N/cm$^2$ was mounted on the test piece, the load was removed, this operation was repeated ten times, and the electric resistance values of the test pieces were measured at nonpressurizing time and pressurizing time of 5 N/cm$^2$. The resistance value retentivity (%) of the test pieces after ten times operation were values dividing the resistance value at pressurizing time by that at nonpressurizing time. The results are indicated in Table 1.

The measurement of the electric resistance value was conducted by first holding the test piece between Teflon plates of approx. 200 g, mounting a copper plate of approx. 0.3 mm of thickness between the test piece and the Teflon plate at that time, and obtaining the resistance value by a digital multimeter with a pair of the copper plates as electrode plates. The pressing was conducted by mounting a weight on the Teflon plate.

As indicated in Table 1, the pressure-sensitive conductive rubber sheet mixed with the carbon black and the whisker exhibits a trend that the resistance value sensitively decreases as the load increases as compared with the rubber sheet mixed only with the carbon black as the conductive member, and the resistance value retentivity at pressurizing time increases, and the resistance value largely decreases.

Example 2 (Comparative Example)

SiC, Si$_3$N$_4$, or BN was used as ceramic powder of the inorganic filler and SiC or glass fiber was used as glass or short fibers but no whiskers were used. The mixtures and the results are listed in Table 2. The variations in the electric resistance values at no load time and after pressing are deteriorated as compared with the whisker.

TABLE 1

(Unit: parts by weight)

|  | Example | | | | Comparison Example | | | | |
|---|---|---|---|---|---|---|---|---|---|
|  | 1 | 2 | 3 | 4 | 1 | 2 | 3 | 4 | 5 |
| Chloroprene rubber | 100 | 100 | 100 | 100 | 100 | 100 | 100 | 100 | 100 |
| Stearic acid | 2 | 2 | 2 | 2 | 2 | 2 | 2 | 2 | 2 |
| Magnesium oxide | 5 | 5 | 5 | 5 | 5 | 5 | 5 | 5 | 5 |
| Age preventing agent | 1 | 1 | 1 | 1 | 1 | 1 | 1 | 1 | 1 |
| Process oil | 4 | 4 | 4 | 4 | 4 | 4 | 4 | 4 | 4 |
| ZnO | 5 | 5 | 5 | 5 | 5 | 5 | 5 | 5 | 5 |
| Ethylene thiourea | 0.5 | 0.5 | 0.5 | 0.5 | 0.5 | 0.5 | 0.5 | 0.5 | 0.5 |
| Carbon black[*1] | 36 | 36 | 36 | 36 | 0 | 18 | 36 | 54 | — |
| Carbon black[*2] |  |  |  |  |  |  | 0 | 0 | 36 |
| Whisker[*3] | 3.6 | 9.2 | 19 | 40 | 0 | 0 | 0 | 0 | 0 |
| Initial electric resistance value (ohm) |  |  |  |  |  |  |  |  |  |
| No load | 1.2M | 880k | 1.1M | 1.7M | 1400M | 1.2M | 640K | 37K | 17K |
| 0.5 kg/cm² | 8k | 9k | 9k | 14k | 640k | 64k | 11k | 7k | 4k |
| 1.0 | 4.5k | 4k | 4k | 11k | 610k | 35k | 7k | 140k | 460 |
| 1.5 | 3k | 3k | 3k | 10k | — | 19k | 4 | 90 | 270 |
| Repetition (ohm) |  |  |  |  |  |  |  |  |  |
| 0 | 1.2M | 600k | 900k | 140k | 1400M | 1M | 500k | 20k | 4k |
| 0.5 kg/cm² | 10k | 10k | 8k | 18k | 600M | 200k | 50k | 1k | 800 |
| Resistance value retentivity (%) | 0.9 | 1.7 | 0.9 | 13 | 42.9 | 20 | 10 | 5 | 20 |

[*1]: Seest 116 (Furnace type).
[*2]: N220 (Furnace type).
[*3]: SiC.

7

TABLE 2

(Unit: parts by weight)

| | Example | | | | | |
|---|---|---|---|---|---|---|
| | 2-1 | 2-2 | 2-3 | 2-4 | 2-5 | 2-6 |
| Chloroprene rubber | 100 | 100 | 100 | 100 | 100 | 100 |
| Stearic acid | 2 | 2 | 2 | 2 | 2 | 2 |
| Magnesium oxide | 5 | 5 | 5 | 5 | 5 | 5 |
| Age preventing agent | 1 | 1 | 1 | 1 | 1 | 1 |
| Process oil | 4 | 4 | 4 | 4 | 4 | 4 |
| ZnO | 5 | 5 | 5 | 5 | 5 | 5 |
| Ethylene thiourea | 0.5 | 0.5 | 0.5 | 0.5 | 0.5 | 0.5 |
| Carbon black[*1] | 36 | 36 | 36 | 36 | 36 | 36 |
| Powder SiC | 32 | | | | | |
| Powder $Si_3N_4$ | | 40 | | | | |
| Powder Bn | | | 28.5 | | | |
| Powder glass | | | | 32 | | |
| Short fiber SiC | | | | | 32 | |
| Short fiber glass | | | | | | 32 |
| Initial electric resistance value (ohm) | | | | | | |
| No load | 8M | 1.8M | 5M | 1.8M | 3M | 12M |
| 0.5 kg/cm² | 190k | 60k | 240k | 130k | 30k | 36k |
| 1.0 | 160k | 45k | 180k | 48k | 12k | 20k |
| 1.5 | 160k | 30k | 130k | 25k | 5k | 10k |
| Repetition (ohm) | | | | | | |
| 0 | 5M | 5M | 5M | 1.5M | 3M | 12M |
| 0.5 kg/cm² | 200k | 100k | 300k | 90k | 30M | 120k |
| Resistance value retentivity (%) | 4 | 2 | 6 | 6 | 1 | 1 |

Example 3

The case that acetylene black was used as carbon black, chloroprene rubber, nitrile rubber (NBR), or a blend of natural rubber (NR) and butyl rubber (BR) was used as rubber having electric insulation was executed. The mixture and the results of the electric resistance values were listed in Table 3.

Since the acetylene black was mixed, the resistance value at no load time was small and the resistance value retentivity after pressurizing was small, the acetylene black is very effective and the blend of the natural rubber and the butyl rubber as the rubber exhibits good result.

The electric resistance value is low with good conductivity at no load time only with the acetylene black, and the resistance value retentivity is 20% as high and the pressure-sensitive conductive rubber sheet can be hardly obtained.

Example 4

Pressure-sensitive conductive rubber sheet was produced by selecting the rubber, the carbon black and inorganic filler to be most preferable as apparent from the abovementioned Example 3, and the resistance values at no load time after repetitive operations and the resistance value at 0.5 kg/cm² pressurizing time were obtained. The results are listed in Table 4.

From the results, even if the materials were the same as the inorganic filler, the whisker of different state was effective in that the variation in the electric resistance value at pressurizing time was large and the pressure-sensitive conductive rubber sheet having large variation in the electric resistance value at pressurizing time and high response to the sensitive variation in the resistance can be provided.

The inorganic filler of the abovementioned whisker is partly exposed on the surface of the rubber matrix, and dispersed and buried in the rubber matrix therein. Thus, the filler exposed on the surface at no load time is point-contacted with the electrode plates. Since the electrode plates eventually hardly become the state completely planely contacted with the rubber matrix, the electric resistance value of the rubber sheet increases, while the pressure-sensitive conductive rubber sheet at pressurizing time is pressed at the filler exposed on the surface on the rubber matrix, thereby gradually planely contacting with the electrode plates. On the other hand, when the pressing force increases, the probability of forming a link further increases due to the contact with the conductive member, thereby reducing the resistance value.

TABLE 3

(Unit: parts by weight)

| | Example | | | C. Example | |
|---|---|---|---|---|---|
| | 3-1 | 3-2 | 3-3 | 3-4 | 3-5 |
| CR | 100 | | | | |
| NBR | | 100 | | | |
| NR/BR[*3] | | | 100 | 100 | 100 |
| ZnO | 5 | 5 | 4 | 4 | 4 |
| Stearic acid | 2 | 0.5 | 1 | 1 | 1 |
| Process oil | 4 | 4 | 4 | 4 | 4 |
| Accelerator CM | 0.5 | 1 | 1 | 1 | 1 |
| Sulfur | 0 | 2 | 1 | 1 | 1 |
| Acetylene black | 54 | 54 | 54 | 54 | 50 |
| Powder SiC | | | | | 0 |
| Whisker SiC | 5 | 5 | 5 | 40 | 0 |
| Repetition (ohm) | | | | | |
| 0 | 8k | 50k | 20k | 15k | 250 |
| 0.5 kg/cm$^2$ | 200 | 300 | 60 | 60 | 50 |
| Resistance value retentivity (%) | 2.5 | 0.6 | 0.3 | 0.4 | 20 |

[*3]: NR/BR=6/4.

TABLE 4

(Unit: part by weight)

| | Example | |
|---|---|---|
| | 4-1 | 4-2 |
| NR/BR | 100 | 100 |
| ZnO | 4 | 4 |
| Stearic acid | 1 | 1 |
| Process oil | 4 | 4 |
| Accelerator CM | 1 | 1 |
| Sulfur | 1 | 1 |
| Acetylene black | 54 | 54 |
| Powder SiC | | |
| Powder Si$_3$N$_4$ | 40 | |
| Whisker SiC | 5 | 40 |
| Repetition (ohm) | | |
| 0 | 70k | 1.2k |
| 0.5 kg/cm$^2$ | 60 | 1.2 |
| Resistance value retentivity (%) | 0.085 | 1.0 |

As described above, the pressure-sensitive conductive rubber sheet of this invention mixes inorganic filler selected from short fiber, powder and whisker in the rubber matrix together with the carbon black, and exposes partly the filler on the surface of the rubber matrix, thereby largely reducing the resistance value by pressing, and improving the sensitivity of sensitively varying the resistance value in response to the variation in the pressing force.

Example 5
(Effect of varying amount of whisker)

After rubber mixture was kneaded in a Banbury mixer according to the mixture shown in Table 5, the mixture was extruded by rolls into sheets of 2 mm of thickness. The sheets were engaged in a mold, and vulcanized by pressing under vulcanizing conditions of 150°C and 20 min. The sheets thus obtained were cut to become approx. 10 cm$^2$ as test pieces, a predetermined load was applied onto the pieces to measure the relationship between the pressing force and the resistance value of the sheets. The results are shown in Fig. 3.

The measurements of the electric resistance values were first conducted by engaging the test piece between stainless steel plates having 0.3 mm of thickness and 100 g of weight as electrode plates, and then applying 6 V of constant voltage to obtain the resistance value by a digital multimeter.

When applying pressing force of 10 g/cm$^2$ or larger was applied, a Teflon plate and a weight were placed on the electrode plates.

Fig. 3 shows the relationship between the pressing force and the resistance value by the variable amounts of the whisker constantly with respect to 30 parts by weight of carbon black. If the whisker was not added, the difference of the resistance value between the pressing forces 1 g/cm$^2$ and 1000 g/cm$^2$ was small, and if the repetition number of pressing was increased to 5 times, the resistance value decreases to exhibit a resistance value curve having smooth slope. On the other hand, when using 80 parts by weight, larger resistance value than 40 parts by weight, and the adding effect of the whisker is obviated. However, if the whisker is added, even if the pressing was repeated five times, the resistance value is stable. The rubber material added with the whisker exhibits the results after five times of repetition.

From the above results, the adding amount of the whisker is preferably 10 to 40 parts by weight.

Example 6
(Effect of varying amount of carbon black)

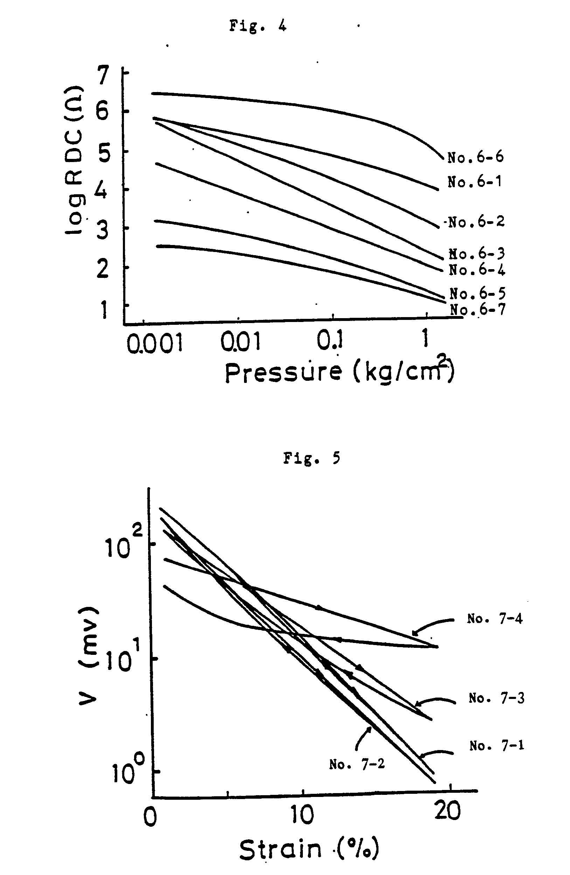

As shown in Table 6, the adding amount of the whisker was fixed to 20 parts by weight, and the adding amounts of the carbon black were varied, test pieces were produced in the same manner as the previous examples, and the relationship between the pressing force and the resistance value of the sheet was measured. The results are shown in Fig. 4.

From the above, the relationship between log P and log R with 30 to 70 parts by weight of the carbon black exhibits linear, and as the pressing force increases, the resistance value gradually decreases, and the varying range of the resistance value becomes large.

TABLE 5

(Unit: parts by weight)

|  | Example | | | C. Example | |
| --- | --- | --- | --- | --- | --- |
|  | 5-1 | 5-2 | 5-3 | 5-4 | 5-5 |
| Natural rubber | 100 | 100 | 100 | 100 | 100 |
| ZnO | 4 | 4 | 4 | 4 | 4 |
| Stearic acid | 1 | 1 | 1 | 1 | 1 |
| Accelerator CM | 4 | 4 | 4 | 4 | 4 |
| Sulfur | 1 | 1 | 1 | 1 | 1 |
| Acetylene black | 30 | 30 | 30 | 30 | 30 |
| Whisker SiC | 10 | 20 | 40 | 0 | 80 |

TABLE 6

(Unit: parts by weight)

|  | Example | | | | C. Example | | |
| --- | --- | --- | --- | --- | --- | --- | --- |
|  | 6-1 | 6-2 | 6-3 | 6-4 | 6-5 | 6-6 | 6-7 |
| Natural rubber | 100 | 100 | 100 | 100 | 100 | 100 | 100 |
| ZnO | 4 | 4 | 4 | 4 | 4 | 4 | 4 |
| Stearic acid | 1 | 1 | 1 | 1 | 1 | 1 | 1 |
| Accelerator CM | 4 | 4 | 4 | 4 | 4 | 4 | 4 |
| Sulfur | 1 | 1 | 1 | 1 | 1 | 1 | 1 |
| Acetylene black | 30 | 40 | 50 | 60 | 70 | 20 | 80 |
| Whisker SiC | 20 | 20 | 20 | 20 | 20 | 20 | 20 |

## Example 7

Test pieces having approx. 2 mm of thickness were produced in the same manner as the previous Examples by the mixture listed in Table 7, the relationship between the compressing distortion and the voltage of the sheets, and the fatigue resistance and creep resistance were measured.

TABLE 7

|  | Example | | C. Example | |
| --- | --- | --- | --- | --- |
|  | 7-1 | 7-2 | 7-3 | 7-4 |
| NR | 100 |  | 100 |  |
| NBR |  | 100 |  | 100 |
| ZnO | 4 | 4 | 4 | 4 |
| Stearic acid | 1 | 1 | 1 | 1 |
| Accelerator CM | 4 | 4 | 4 | 4 |
| Sulfur | 1 | 2 | 1 | 1 |
| Acetylene black | 50 | 50 | 40 | 50 |
| Whisker SiC | 20 | 20 | 20 | 0 |
| Powder SiC | 0 | 0 | 10 | 20 |

In this Example, a method of measuring the relationship between the compressing distortion and the voltage included holding the sheet by the electrode plates, flowing a current of 5 microamperes thereto, then mounting it in a load cell type compression tester (Autograph: made by Shimadzu Seisakusho Ltd., Japan), and the voltage value was measured at pressing speed of 0.5 mm/sec by a digital multimeter.

A method of measuring the fatigue resistance due to repetitive pressing included repetitively applying pressure of 0.5 kg/cm$^2$ 100,000 to 8,000,000 times at a rate of 25 times per one second to the sheet, the measuring the electric resistance value, and obtaining by dividing it by the electric resistance value under pressure of 0.5 kg/cm$^2$ before the repetitive pressing.

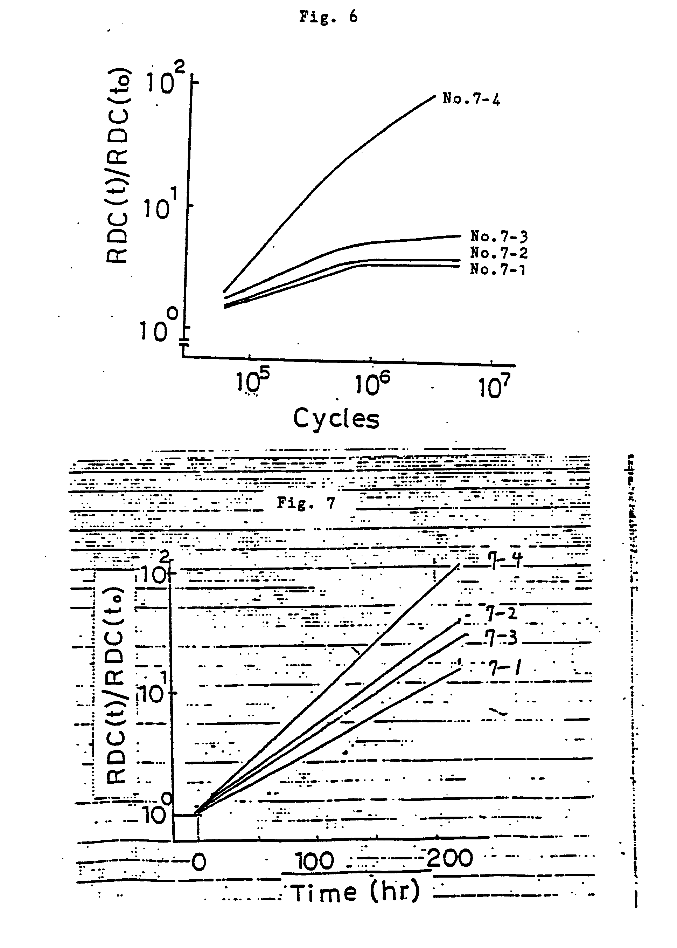

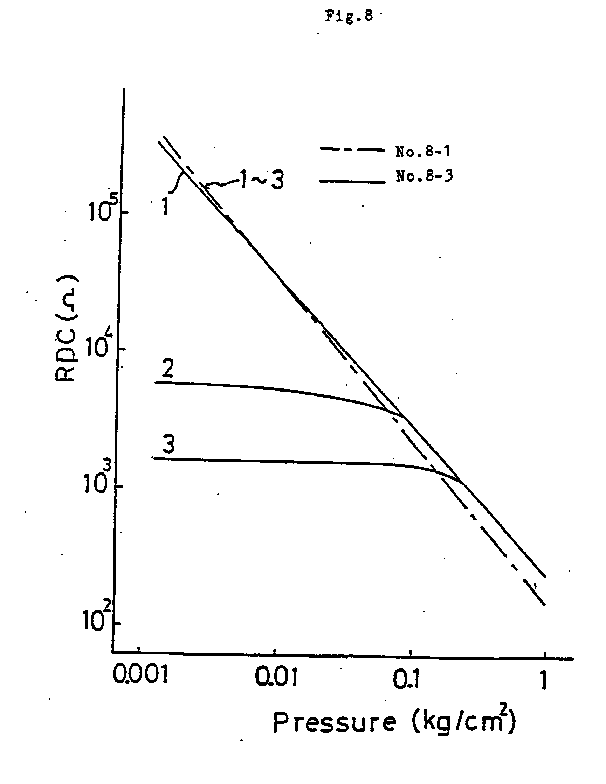

Further, a method of measuring the creep resistance included applying a load of 0.5 kg/cm$^2$ to the sheet, and obtaining the value produced by dividing the resistance value at creep applying time by the resistance value at creep time being 0. The results are shown in Figs. 5 to 7.

From the results, the pressure-sensitive conductive rubber material of this invention linearly varies at the voltage according to the magnitude of the compressing distortion, and substantially linearly displaces even if the load was removed. Thus, its hysteresis is small, the resistance value after repetitive deformation is small, and the creep resistance is excellent.

According to this invention as described above, the pressure-sensitive conductive rubber material includes the conductive members of the carbon black and the whisker mixed in the amounts of predetermined ranges. Thus, the pressing force and the resistance value exhibit linearly analog variation so that the resistance value gradually varies with respect to the pressing force, and the relationship between the compressing distortion and the voltage similarly varies. Therefore, the characteristics can be not only quantitatively obtained, but also the hysteresis is small, the variation in the resistance value after repetitive deformations is small, and the creep resistance is excellent, thereby providing high reliability as a pressure-sensitive sensor.

## Example 8

After rubber mixtures were kneaded by a Banbury mixer according to the mixture shown in Table 8, it was extruded to sheets having 2 mm of thickness by rolls. After glass powder having electric insulation shown in Table 5 was wiped on both side surfaces of the sheet, the sheets were engaged therebetween and the sheets were vulcanized by pressing under vulcanizing conditions of 150°C and 20 min. The obtained sheets were cut into 30×33 mm to form test pieces. Then, the initial electric resistance values at nonpressurizing time (however, a Teflon plate of 100 g was placed on the test piece) or at pressurizing time. After the sheets were pressed 10 times under the pressing conditions of 0.5 kg/cm$^2$, the electric resistance values at nonpressurizing time and pressurizing time of 0.5 kg/cm$^2$ were measured. The resistance value retentivity (%) at 10 times repetitive pressing times were the value produced by dividing the resistance value at pressurizing time by that at nonpressurizing time.

In order to measure the degree of variations in the electric resistance value, a large load was gradually applied discontinuously at the pitch of 5 to 15 sec to the test pieces, the electric resistance values at that time were measured to obtain the varying curve of the first electric resistance value with respect to the pressing, and further the load was then removed, loads are applied again at the pitch of 5 to 15 sec, and second and third electric resistance values were obtained. The results are shown in Fig. 8.

Further, in order to measure the creep resistance of the rubber sheet, a load of 0.5 kg/cm$^2$ was applied to the sheet to obtain the variation in the resistance value at creep applying time. The results are shown in Table 9.

11

TABLE 8

(Unit: parts by weight)

| | Example | | C. Example | |
|---|---|---|---|---|
| | 8-1 | 8-2 | 8-3 | 8-4 |
| NR | 100 | 100 | 100 | 100 |
| ZnO | 4 | 4 | 4 | 4 |
| Stearic acid | 1 | 1 | 1 | 1 |
| Process oil | 4 | 4 | 4 | 4 |
| Accelerator CM | 1 | 1 | 1 | 1 |
| Sulfur | 1 | 1 | 1 | 1 |
| Acetylene black | 50 | 50 | 50 | 50 |
| Whisker SiC[*1] | 20 | 20 | 0 | 0 |
| Glass powder[*1] | 2.3 | 1.4 | none | none |

[*1]: % by weight.

TABLE 9

| | Example | | C. Example | |
|---|---|---|---|---|
| | 8-1 | 8-2 | 8-3 | 8-4 |
| 10 Times repetition (ohm) | | | | |
| 0 | 80k | 100k | 8k | 250 |
| 0.5 kg/cm$^2$ | 0.15 | 0.14 | 1 | 20 |
| Creep resistance[*2] | | | | |
| 1 hr (ohm) | 0.95 | 0.9 | 1 | 1.5 |
| 60 hrs | 0.9 | 0.9 | 4 | 8 |
| 200 hrs | 0.9 | 0.9 | 15 | 150 |

[*2]: Value obtained by dividing the resistance value (Rf) at creeping time by resistance value ($R_o$) before creeping.

From the results, the conductive rubber sheet in which the glass powder was buried on the surface of the rubber sheet mixed with the carbon black and the whisker exhibits high resistance value at nonpressurizing time as compared with that in which the glass powder was not buried on the surface, the variation in the resistance value at pressurizing time was large with good sensitivity, the variation in the resistance value with respect to the repetitive pressing became small, the hysteresis of the electric resistance value became small, and the creep resistance is excellent.

According to this invention as described above, the pressure-sensitive conductive rubber sheet is produced by burying glass powder having electric insulation on both or one side surface of the sheet obtained by mixing the inorganic filler selected from the short fiber, powder and the whisker in the rubber matrix together with the carbon black, thereby holding insulating state with the electric resistance value at nonpressurizing time becoming further larger, while largely decreasing the electric resistance value in one pressurizing state to become conductive state and providing large variation in the resistance value to provide good sensitivity, and further providing small variation in the electric resistance value even if applying the repetitive pressing to the sheet to provide good fatigue resistance and creep resistance with long lifetime.

## Claims

1. An electrically conductive rubber material with pressure-responsive variable resistivity, said material comprising:
   a rubber matrix formed of an electrically insulative rubber;
   electrically conductive carbon black distributed in said matrix;

and an inorganic filler of ceramic material distributed in said matrix;

characterized in that the ceramic material of the inorganic filler mainly consists of acicular whiskers of alpha-silicone carbide, beta-silicone carbide, alpha-aluminum oxide, titanium oxide and/or tin oxide; that the whiskers have a diameter of 0.05 to 3 µm and a length of 5 to 500 µm; that in 100 parts by weight of said rubber, 30 to 70 parts by weight of the carbon black and 3.6 to 60 parts by weight of the whiskers are incorporated, the total amount of the carbon black and the whiskers being 39.6 to 94 parts by weight per 100 parts by weight of said rubber.

2. Rubber material as claimed in claim 1, wherein said inorganic filler mixed in the rubber matrix is partly exposed on the surface of said rubber material.

3. Rubber material as claimed in claim 1, wherein said inorganic filler, besides the whiskers, comprises short fibers of silicon carbide, glass and/or silicon nitride having 100 µm to 10 mm in length and 0.3 to 30 µm in diameter.

4. Rubber material as claimed in claim 1, wherein said inorganic filler, besides the whiskers, comprises ceramic powder of carbides selected from silicon carbide, titanium carbide, boron carbide, tungsten carbide, nitrides selected from silicon nitride, aluminum nitride, boron nitride, and titanium nitride, and oxides selected from alumina, zirconia, beryllia, having 0.05 to 100 µm in diameter.

5. Rubber material as claimed in any of claims 1, 3 and 4, characterized in that it is sheet shaped, and along at least one of the surfaces a surface layer (3) extends which contains electrically non-conductive powder in an amount of 0.05 to 5% by weight of the material of the surface layer, the powder having a particle size of 0.1 to 100 µm in diameter.

6. Rubber material as claimed in claim 5, wherein said powder consists of glass, calcium carbonate, clay, talc, phenyl resin, epoxy resin, urea resin, and/or ebonite.

7. Rubber material as claimed in any of claims 1 to 6, wherein the incorporated contents of the whiskers is 10 to 60 parts by weight and the incorporated total amount of the carbon black and the whiskers is 40 to 90 parts by weight per 100 parts by weight of said rubber.

## Patentansprüche

1. Elektrisch leitfähiges Gummimaterial mit veränderlichem druckempfindlichen spezifischen Widerstand, mit:

einer Gummimatrix, die aus elektrisch isolierendem Gummi gebildet ist;

elektrisch leitfähigem Ruß, der in dieser Matrix verteilt ist;

und einem anorganischen Füllstoff aus keramischem Material, der in dieser Matrix verteilt ist;

dadurch gekennzeichnet, daß das keramische Material des anorganischen Füllstoffes hauptsächlich aus nadelförmigen Whiskern aus alpha-Siliciumkarbid, beta-Siliciumkarbid, alpha-Aluminiumoxid, Titanoxid und/oder Zinnoxid besteht; daß die Whisker einen Durchmesser von 0,05 bis 3 µm und eine Länge von 5 bis 500 µm aufweisen; daß in 100 Gewichtsteilen dieses Gummis 30 bis 70 Gewichtsteile Ruß und 3,6 bis 60 Gewichtsteile Whisker enthalten sind, wobei der gesamte Anteil an Ruß und Whiskern 39,6 bis 94 Gewichtsteile pro 100 Gewichtsteilen dieses Gummis beträgt.

2. Gummimaterial nach Anspruch 1, bei welchem der in der Gummimatrix eingemischte anorganische Füllstoff teilweise an der Oberfläche des Gummimaterials frei liegt.

3. Gummimaterial nach Anspruch 1, bei welchem der anorganische Füllstoff, abgesehen von den Whiskern, kurze Fasern aus Siliciumkarbid, Glas und/oder Siliciumnitrid mit 100 µm bis 10 mm Länge und 0,3 bis 30 µm Durchmesser beinhaltet.

4. Gummimaterial nach Anspruch 1, bei welchem der anorganische Füllstoff, abgesehen von den Whiskern, keramische Pulver aus Karbiden, die aus Siliciumkarbid, Titankarbid, Borkarbid, Wolframkarbid ausgewählt sind, Nitride, die aus Siliciumnitrid, Aluminiumnitrid, Bornitrid und Titannitrid ausgewählt sind, und Oxide, die aus Aluminiumoxid, Zirkonoxid und Berylliumoxid ausgewählt sind, mit 0,05 bis 100 µm Durchmesser aufweist.

5. Gummimaterial nach einem der Ansprüche 1, 3 und 4, dadurch gekennzeichnet, daß es fellförmig ist und sich entlang zumindest einer der Oberflächen eine Oberflächenschicht (3) erstreckt, die elektrisch nicht-leitfähiges Pulver in einem Anteil von 0,05 bis 5 Gew.-% des Materials der Oberflächenschicht enthält, wobei das Pulver eine Partikelgröße von 0,1 bis 100 µm Durchmesser aufweist.

6. Gummimaterial nach Anspruch 5, bei welchem das Pulver aus Glas, Calciumcarbonat, Ton, Talk, Phenylharz, Epoxyharz, Harnstoffharz und/oder Ebonit besteht.

7. Gummimaterial nach einem der Ansprüche 1 bis 6, bei welchem der Gehalt an Whiskern 10 bis 60 Gewichtsteile und der gesamte beinhaltete Betrag an Ruß und Whiskern 40 bis 90 Gewichtsteile pro 100 Gewichtsteile Gummi beträgt.

## Revendications

1. Matériau en caoutchouc conducteur électrique à résistance variable en fonction d'une pression, ledit matériau comprenant:

une matrice de caoutchouc formée d'un caoutchouc isolant électrique;

du noir de carbone conducteur électrique réparti dans ladite matrice;

et une charge inorganique en matériau céramique répartie dans ladite matrice;

caractérisé en ce que le matériau céramique de la charge inorganique est principalement constitué de barbes aciculaires en carbure d'alpha-silicium, carbure de béta-silicium, oxyde d'alpha-aluminium, d'oxyde de titane et/ou d'oxyde d'étain; que les barbes ont un diamètre de 0,05 à 3 μm et une longueur de 5 à 500 μm; que dans 100 parties en poids dudit caoutchouc, sont incorporées 30 à 70 parties en poids du noir de carbone et 3,6 à 60 parties en poids des barbes, la quantité totale de noire de carbone et de barbes étant de 39,6 à 94 parties en poids pour 100 parties en poids dudit caoutchouc.

2. Matériau en caoutchouc selon la revendication 1, où ladite charge inorganique répartie dans la matrice de caoutchouc est partiellement exposée sur la surface dudit matériau en caoutchouc.

3. Matériau en caoutchouc selon la revendication 1, où ladite charge inorganique, à coté des barbes, comprend de courtes fibres en carbure de silicium, du verre et/ou du nitrure de silicium ayant de 100 μm à 10 mm de longueur et de 0,3 à 30 μm de diamètre.

4. Matériau en caoutchouc selon la revendication 1, où ladite charge inorganique, à coté des barbes, comprend une poudre céramique de carbures choisis parmi le carbure de silicium, le carbure de titane, le carbure de bore, le carbure de tungstène, des nitrures choisis parmi le nitrure de silicium, le nitrure d'aluminium, le nitrure de bore, et le nitrure de titane, et des oxydes choisis parmi l'alumine, la zircone, la glucine, ayant de 0,05 à 100 μm de diamètre.

5. Matériau en caoutchouc selon l'une quelconque des revendications 1, 3 et 4, caractérisé en ce qu'il a la forme d'une feuille, et que s'étend sur au moins une de ses surfaces une couche comprenant une poudre non conductrice d'électricité dans une quantité de 0,05 à 5% en poids du matériau de la couche de recouvrement, la poudre ayant une taille de particule de 0,1 à 100 μm de diamètre.

6. Matériau en caoutchouc selon la revendication 5, où ladite poudre est du verre, du carbonate de calcium, de l'argile, du talc, de la résine de phényl, de la résine d'époxy, de la résine d'urée, et/ou d'ébonite.

7. Matériau en caoutchouc selon l'une quelconque des revendications 1 à 6, où les contenus incorporés des barbes représentent de 10 à 60 parties en poids et la quantité totale de noir de carbone et de barbes représente de 40 à 90 parties en poids pour 100 parties en poids dudit caoutchouc.

EP 0 207 450 B1

Fig. 1

Fig. 2

Fig. 4

No.6-6
No.6-1
No.6-2
No.6-3
No.6-4
No.6-5
No.6-7

Fig. 5

No. 7-4

No. 7-3

No. 7-1

No. 7-2

3

Fig. 6

Fig. 7

4

Fig.8